# EUROPEAN PATENT APPLICATION

(11) **EP 4 307 517 A1**
(43) Date of publication of application: **17.01.2024**
(21) Application number: 22848565.2
(22) Date of filing: 27.07.2022
(51) Int. Cl.: H02J 7/00, G01C 21/16, A01D 34/00, H01R 13/631

(54) **ROBOT GUIDE DEVICE AND COURSE ADJUSTING METHOD, ROBOT SYSTEM AND DOCKING GUIDE METHOD THEREFOR**

(30) Priority: 28.07.2021 CN 202110857227; 28.07.2021 CN 202121738237 U; 28.07.2021 CN 202110857195
(71) Applicant: Zhejiang Sunseeker Industrial Co., Ltd., Jinhua, Zhejiang 321042 (CN)
(72) Inventor: ZHOU, Chang, Jinhua, Zhejiang 321042 (CN); RAN, Yuanzhong, Jinhua, Zhejiang 321042 (CN); YAO, Yongzhe, Jinhua, Zhejiang 321042 (CN); RAN, Wenlin, Jinhua, Zhejiang 321042 (CN)
(74) Representative: Viering, Jentschura & Partner mbB Patent- und Rechtsanwälte
(86) International application number: PCT/CN2022/108176
(87) International publication number: WO 2023/005960

(57) **Abstract**

An embodiment of the present invention discloses a robot guidance device, comprising a pair of guidance cables, wherein the pair of guidance cables are disposed symmetrically relative to a center line and spaced apart from each other to form a spacing region, and a magnetic field in the spacing region is used to guide a robot to adjust its heading; and each guidance cable comprises a pair of electrically connected guidance wire segments, the pair of guidance wire segments are disposed opposite and spaced apart from each other, and a direction in which the pair of guidance wire segments are spaced apart is consistent with a direction in which the pair of guidance cables are spaced apart. An embodiment of the present invention also discloses a heading adjustment method, robot system and docking guidance method thereof.

## Description

### Cross-reference to related applications

This application claims the priorities of the three Chinese patent applications as following:
1. filling date: July 28, 2021; the application number: 2021101572278 ; title: "guidance device and method of robot, charging station, self-charging system and method";
2. filling date: July 28, 2021; the application number: 2021217382371 ; title: "guidance device of robot and charging station";
3. filling date: July 28, 2021; the application number: 2021108571951 ; title: "control method of robot system, robot and readable storege medium";
the full text of the above applications are incorporated herein by reference.

### TECHNICAL FIELD

The present disclosure relates to the field of automatic control on robots, typically to the field of automatic control on intelligent mowers, and specifically to a robot guidance device and a heading adjustment method, a robot system and a docking guidance method therefor.

### BACKGROUND

Various robots, such as mowing robots, sweeping robots, and mopping robots, appear on the market at present. Mowing robots are used as examples. Mainstream mowing robots usually travel along a random or regular path to mow a lawn within a predetermined work area. The predetermined work area is generally limited by a boundary.

When a robot operates, a station (signal station) at which the robot stops continuously sends boundary signals to a boundary, and the boundary signals generate an electromagnetic field around the boundary, and the robot captures the boundary signals by detecting the electromagnetic field to determine that the robot is located within a predetermined work area. A charging station is further disposed on the boundary. The robot having low power has to travel to a boundary line and move along the boundary line. The robot moves along the boundary and enters the charging station according to the guidance of the boundary signals. The robot repeatedly crushes a lawn around the boundary during long-term use, causing damage to the lawn around the boundary to affect aesthetics, and even exposing buried boundary devices to the outside to damage the boundary devices easily. Moreover, when the robot having low power moves along the boundary and enters the charging station according to the guidance of the boundary signals, in order to accurately dock the robot with a charging terminal in the charging station, a mechanical guidance structure is disposed in the charging station. After the robot enters the charging station, the mechanical guidance structure cooperates with the boundary signals to guide the robot to move along a preset trajectory on the charging station. As a result, the structure in the charging station is relatively complex. In addition, the robot needs to be guided by the boundary signals all the time to travel along the boundary and enter the charging station, so the charging station needs to be disposed at the boundary. The boundary usually has a corner, and changes in signals at the corner may cause deviations in robot's travel. Therefore, when the charging station is disposed, there should be a distance between the charging station and the corner to accurately dock the robot with the charging terminal, which limits the layout of the charging station and the boundary.

### BRIEF SUMMARY OF SOME EXAMPLES

In order to solve the above technical problems in the prior art, one embodiment of the present disclosure provides a robot guidance device, comprising a pair of guidance cables, wherein the pair of guidance cables are disposed symmetrically relative to a centerline and spaced apart from each other to form a spacing region, and a magnetic field in the spacing region is used to guide a robot to adjust its heading; and the guidance cables each comprises a pair of electrically connected guidance wire segments, a pair of the guidance wire segments are oppositely disposed and spaced apart from each other, and a direction in which a pair of the guidance wire segments are spaced apart is consistent with a direction in which the pair of guidance cables are spaced apart.

As a preferred embodiment of the present disclosure, wherein directions of current in two adjacent guidance wire segments of each of the guidance cables are opposite, and directions of current in two said guidance wire segments symmetrical relative to the centerline are opposite.

As a preferred embodiment of the present disclosure, wherein the guidance device has a first end and a second end along extension directions of the guidance cables; and the guidance device comprises a first functional portion connected to a side of each of the guidance cables facing the first end and a second functional portion connected to a side of each of the guidance cables facing the second end, and the first functional portion and the second functional portion construct a pair of the guidance wire segments of the guidance cables into an electrical circuit

As a preferred embodiment of the present disclosure, wherein two first functional portions are provided, and at least one of the first functional portions comprises a pair of first wire segments; wherein the pair of first wire segments are electrically connected to the pair of guidance wire segments respectively; and the pair of first wire segments at least partially overlap each other; or the pair of first wire segments are spaced apart.

As a preferred embodiment of the present disclosure, wherein two first functional portions with the pair of first wire segments are provided, both extend towards the centerline, and are electrically connected to a control module; and two second functional portions are provided, and are connected to sides of the pair of guidance cables respectively facing the second end.

As a preferred embodiment of the present disclosure, wherein one first functional portion with the pair of first wire segments is provided, and the other first functional portion is a first connecting wire segment connecting the pair of guidance wire segments; wherein one second functional portion is provided and connected to the pair of guidance cables.

As a preferred embodiment of the present disclosure, wherein the second functional portion comprises a pair of second wire segments, and the pair of second wire segments are oppositely disposed; two ends of each of the second wire segments are connected to two guidance wire segments in different said guidance cables respectively, and the two guidance wire segments symmetrical relative to the centerline are connected to the same second wire segment.

As a preferred embodiment of the present disclosure, wherein each of the second wire segments has a first inclined portion, a horizontal portion, and a second inclined portion that are connected sequentially, and the two horizontal portions in a pair of the second wire segments overlap.

As a preferred embodiment of the present disclosure, wherein one first functional portion is provided and comprises a pair of first wire segments extending in the same direction; and two ends of each of the first wire segments are connected to two guidance wire segments in the different guidance cables respectively, and the two guidance wire segments symmetrical relative to the centerline are connected to the same first wire segment.

As a preferred embodiment of the present disclosure, wherein two second functional portions are provided and spaced apart from each other; and at least one of the second functional portions comprises a pair of second wire segments extending obliquely towards the centerline; wherein the pair of second wire segments are electrically connected to the pair of guidance wire segments respectively.

As a preferred embodiment of the present disclosure, wherein the distance between the pair of guidance wire segments of the guidance cable is D1; and the distance between the pair of second wire segments is D2, wherein 1/2D1≤D2≤2/3D1.

As a preferred embodiment of the present disclosure, wherein the angle between the second wire segment and the guidance wire segment connected thereto is α, and 90°<α<180°. Further preferably, wherein 100°<α≤135°.

As a preferred embodiment of the present disclosure, wherein two second functional portions are provided; and at least one of the second functional portions comprises a second connecting wire segment connecting the pair of guidance wire segments.

As a preferred embodiment of the present disclosure, wherein the second connecting wire segment is an arc wire segment or a straight wire segment.

As a preferred embodiment of the present disclosure, wherein the pair of guidance wire segments comprises an inner guidance wire segment closer to the centerline and an outer guidance wire segment farther from the centerline; a pair of sensors are disposed on the robot, which are used to detect a working magnetic field generated by the guidance device and control the robot to adjust its heading according to the detected working magnetic field; and when the pair of sensors are located at symmetrical positions relative to the centerline, the distances between the sensor and the outer guidance wire segment and the inner guidance wire segment that are located on the same side of the centerline as the sensor are C0 and Ci, respectively; and the distances between the sensor and the outer guidance wire segment and the inner wire guidance wire segment that are located on two sides of the centerline are F0 and Fi, respectively; wherein Ci<C0≤Fi<*Fo*, 1/2C0≤Ci≤4/5C0, and 1/2Fi≤C0<Fi. Preferably, wherein 2/3C0≤Ci. Preferably, wherein C0≤2/3Fi.

As a preferred embodiment of the present disclosure, wherein when the pair of sensors are located at the symmetrical positions along the centerline, the distances between the sensors and the centerline are D3, and 1/2Ci≤D3≤1/2C0.

In order to solve the above technical problems in the prior art, one embodiment of the present disclosure provides a heading adjustment method for a robot, wherein the heading adjustment method applied to the robot guidance device comprises: receiving a magnetic field signal of a working magnetic field generated by the guidance device sensed by at least one sensor; and adjusting the heading of the robot based on the working magnetic field generated by the guidance device.

As a preferred embodiment of the present disclosure, wherein adjusting the robot toward a direction of a preset trajectory when a strength ratio of the working magnetic fields obtained by the pair of sensors of the robot is not equal to a preset magnetic field strength ratio.

As a preferred embodiment of the present disclosure, wherein after the step of receiving a magnetic field signal of a working magnetic field generated by the guidance device detected by at least one sensor, and before the step of adjusting the heading of the robot, the method further comprises the following step: controlling the robot to move a preset distance or move for a preset duration.

As a preferred embodiment of the present disclosure, wherein the guidance device has a first end and a second end in extension directions of the guidance cables; the guidance device comprises a first functional portion connected to a side of each of the guidance cables facing the first end and a second functional portion connected to a side of each of the guidance cables facing the second end, and the first functional portion and the second functional portion construct a pair of guidance wire segments of each of the guidance cables into an electrical circuit; andthe step of adjusting the heading of the robot further comprises the following step: controlling the robot to reduce the current moving speed based on the magnetic field generated by the first functional portion, which is sensed by at least one sensor of the robot.

In order to solve the above technical problems in the prior art, one embodiment of the present disclosure provides a charging station comprises a base plate, a charging terminal, and the guidance device, wherein the guidance device is disposed on the base plate.

In order to solve the above technical problems in the prior art, one embodiment of the present disclosure provides a robot system, comprises: a robot provided with a pair of sensors; a boundary surrounding a work area for the robot to work; and the above charging station.

In order to solve the above technical problems in the prior art, one embodiment of the present disclosure provides a docking guidance method for a robot system, wherein the docking guidance method is applied to the robot system, and comprises: controlling the robot to search for the boundary and move along the boundary in response to a charging instruction; receiving a magnetic field signal of a working magnetic field generated by the guidance device sensed by at least one sensor; and adjusting the heading of the robot until the robot is docked with the charging terminal of the charging station based on the working magnetic field generated by the guidance device.

As a preferred embodiment of the present disclosure, wherein after the step of receiving a magnetic field signal of a working magnetic field sensed by at least one sensor, and before the step of adjusting the heading of the robot until the robot is docked with the charging terminal of the charging station based on the working magnetic field, the method further comprises: controlling the robot to move a preset distance or move for a preset duration.

As a preferred embodiment of the present disclosure, wherein after the step of controlling the robot to move a preset distance or move for a preset duration, the method further comprises: controlling the robot to reduce the current moving speed.

As a preferred embodiment of the present disclosure, wherein controlling the robot to reduce the current moving speed when at least one sensor of the robot senses the working magnetic field generated by the guidance device.

In order to solve the above technical problems in the prior art, one embodiment of the present disclosure provides a control method for a robot system, wherein the robot system comprises: a sensing device, a charging station with a charging terminal, and a robot, and the robot is provided with at least one sensor which is configured to detect whether the robot approaches the sensing device; the control method comprises: the robot is in the working state, determining whether the robot needs to enter the charging station when the robot approaches the sensing device; the robot enters into a regression state if it needs to enter the charging station.

As a preferred embodiment of the present disclosure, wherein the step of determining whether the robot needs to enter the charging station specifically comprises the following steps: determining whether the power of the robot is less than or equal to a first threshold; if the power of the robot is less than or equal to the first threshold, the robot needs to enter the charging station.

As a preferred embodiment of the present disclosure, wherein the sensing device is further used to guide the robot into the charging station.

As a preferred embodiment of the present disclosure, wherein the sensing device comprises a pair of guidance cables provided in the charging station; the pair of guidance cables are disposed symmetrically relative to a centerline and spaced apart from each other to form a spacing region; the occurrence of the robot approaching the charging station is based on the working magnetic field of the sensing device detected by at least one sensor .

As a preferred embodiment of the present disclosure, wherein the step of the robot enters into the regression state specifically comprises the following step: adjusting the heading of the robot based on the working magnetic field until the robot is docked with the charging terminal.

As a preferred embodiment of the present disclosure, wherein before the step of adjusting the heading of the robot based on the working magnetic field until the robot is docked with the charging terminal, the method includes: moving the robot towards the charging terminal for a preset distance or a preset duration.

As a preferred embodiment of the present disclosure, wherein a pair of sensors are provided on the robot; the step of adjusting the heading of the robot based on the working magnetic field until the robot is docked with the charging terminal includes adjusting the robot toward a direction of a preset trajectory when a strength ratio of the working magnetic fields obtained by the pair of sensors of the robot is not equal to a preset magnetic field strength ratio.

As a preferred embodiment of the present disclosure, wherein if a power level of the robot is not less than or equal to a first threshold, determining whether a pending regression duration of the robot is less than or equal to a pending regression duration threshold; if the pending regression duration of the robot is less than or equal to the pending regression duration threshold, the robot enters the charging station.

As a preferred embodiment of the present disclosure, wherein the step of the robot enters into the regression state specifically comprises the following step: controlling the heading of the robot until the robot enters the charging station to arrive at a docking position.

As a preferred embodiment of the present disclosure, wherein the robot is provided withe a battery packon, which has at least one battery cell; wherein the power level of the robot is the power level of the battery pack or the power level of any one of the battery cells.

As a preferred embodiment of the present disclosure, when the power level of the robot is equal to or lower than a second threshold, the robot enters into the regression state, wherein the first threshold is higher than the second threshold.

As a preferred embodiment of the present disclosure, wherein the sensing device is located outside the charging station, and the farther the sensing device is from the entrance and exit of the charging station, the greater the value of the second threshold.

As a preferred embodiment of the present disclosure, wherein the step of determining whether the robot needs to enter the charging station specifically comprises the following steps: determining whether the pending regression duration of the robot is less than or equal to the pending regression duration threshold; if the pending regression duration of the robot is less than or equal to the pending regression duration threshold, the robot enters the charging station.

As a preferred embodiment of the present disclosure, wherein if the pending regression duration of the robot is not less than or equal to the first threshold, determining whether the power level of the robot is less than or equal to the first threshold; if the power level of the robot is less than or equal to the first threshold, the robot enters the charging station.

As a preferred embodiment of the present disclosure, wherein in the step of determining whether the robot needs to enter the charging station, if the robot does not need to enter the charging station, the robot avoids the charging station.

In order to solve the above technical problems in the prior art, one embodiment of the present disclosure provides a robot, wherein sensors and a controller are provided on the robot, and the controller is configured to perform the above control method of the robot system.

In order to solve the above technical problems in the prior art, one embodiment of the present disclosure provides a non-temporary computer-readable storage medium, wherein when instructions in the storage medium are executed by a processor, the processor is enabled to perform the above control method.

### BRIEF DESCRIPTION OF THE SEVERAL VIEWS OF THE DRAWING(S)

One or more embodiments are illustrated exemplarily by means of pictures in the accompanying drawings corresponding thereto; these exemplary illustrations do not constitute a limitation of the embodiments, and elements in the accompanying drawings having the same reference numerical designation are indicated as similar elements, and the drawings in the accompanying drawings do not constitute a limitation of scale unless specifically stated.
Figure 1 is a schematic diagram of the first guidance device according to the first embodiment of the present disclosure.
Figure 2 is a schematic diagram of a robot entering a charging station with the first guidance device according to the first embodiment of the present disclosure.
Figure 3 is a schematic diagram of a robot entering a charging station with the first guidance device according to the first embodiment of the present disclosure.
Figure 4 is a schematic diagram of the second guidance device according to the first embodiment of the present disclosure.
Figure 5 is a schematic diagram of the third guidance device according to the first embodiment of the present disclosure.
Figure 6 is a schematic diagram of a robot entering a charging station with the third guidance device according to the first embodiment of the present disclosure.
Figure 7 is a schematic diagram of the fourth guidance device according to the first embodiment of the present disclosure.
Figure 8 is a schematic diagram of the fifth guidance device according to the first embodiment of the present disclosure.
Figure 9 is a schematic diagram of the sixth guidance device according to the first embodiment of the present disclosure.
Figure 10 is a flow chart of a heading adjustment method according to the second embodiment of the present disclosure.
Figure 11 is a flow chart of another heading adjustment method according to the second embodiment of the present disclosure.
Figure 12 is a schematic diagram of a robot system according to the fourth embodiment of the present disclosure.
Figure 13 is a schematic diagram of another robot system according to the fourth embodiment of the present disclosure.
Figure 14 is a schematic diagram of a further robot system according to the fourth embodiment of the present disclosure.
Figure 15a is a flow chart of a docking guidance method according to the fifth embodiment of the present disclosure.
Figure 15b is a flow chart of a docking guidance method according to the sixth embodiment of the present disclosure.
Figure 16 is a flow chart of performing the step of entering the regression state according to the sixth embodiment of the present disclosure.

### DETAILED DESCRIPTION

The present disclosure will be described in detail below in connection with the specific embodiments shown in the accompanying drawings. However, these embodiments do not limit the invention, and structural, methodological, or functional changes made by a person of ordinary skill in the art in accordance with these embodiments are included in the scope of protection of the invention.

In the description below, certain specific details are set forth for the purpose of illustrating various embodiments of the disclosure in order to provide a thorough understanding of various embodiments of the disclosure. However, those skilled in the art will recognize that embodiments may be practiced without one or more of these specific details. In other instances, familiar devices, structures and techniques associated with the present application may not be shown or described in detail so as to avoid unnecessary confusion in the description of the embodiments. Unless the context otherwise requires, the word "includes" and its variants, such as "contains", "comprises" and "has", should be understood throughout the specification and claims as having an open, inclusive meaning, i.e. as "includes, but is not limited to". In specific embodiments of the invention, the term "many" means two or more unless expressly specified and limited.

Unless the context otherwise requires, the word "includes" and its variants, such as "contains", "comprises" and "has", should be understood throughout the specification and claims as having an open, inclusive meaning, i.e. as "includes, but is not limited to".

In the following, the various embodiments of the invention will be described in detail in connection with the accompanying drawings, so that the objects, features and advantages of the invention can be more clearly understood. It should be understood that the embodiments shown in the accompanying drawings are not intended to limit the scope of the present disclosure, but only to illustrate the substantial spirit of the technical solutions of the invention.

References to "an embodiment" or "some embodiments" throughout the specification indicate that a particular feature, structure or characteristic described in conjunction with an embodiment is included in at least one embodiment. Thus, the occurrence of the words "in one embodiment" or "in some embodiments" throughout the specification need not all refer to the same embodiment. In addition, particular features, structures or characteristics may be combined in any way in one or more embodiments.

The singular forms "a" and "an", as used in the specification and accompanying claims, include one referent or more than one referents unless the context clearly provides otherwise. It should be noted that the term "or" is normally used in the sense that it includes "and/or", unless the context clearly specifies otherwise.

In the following description, in order to clearly demonstrate the structure and operation of the present disclosure, many directional words will be used, but the words "front", "back", "left", "right", "outer", "inner", "outward", "inward", "up", "down" and other words should be understood as convenient language rather than limiting words.

The following describes embodiments of the present disclosure with reference to the accompanying drawings. In order to reduce the length of a guidance device, each wire in the guidance device is generally constructed as a slender annular coil, and long sides of the annular coil may be approximately regarded as parallel straight power-on cables.

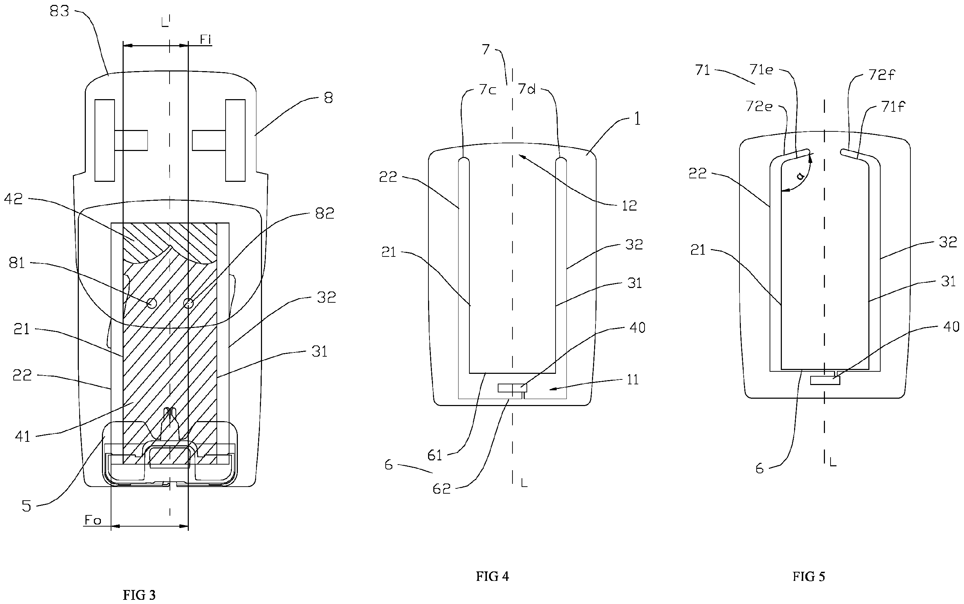

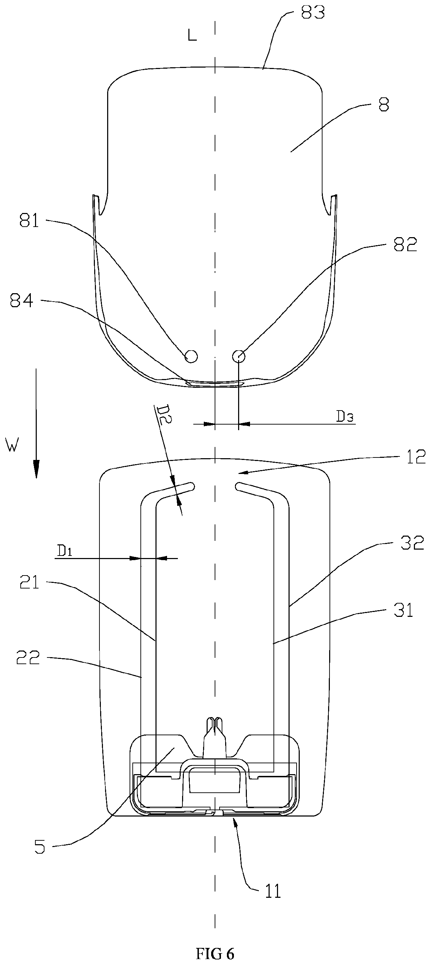

A first embodiment of the present disclosure relates to a robot guidance device. FIG. 6 is a schematic diagram showing that the guidance device in FIG. 5 is applied to a charging station and a robot moves towards the charging station. The direction indicated by arrow W is a direction in which the robot 8 enters the guidance device. In other schematic diagrams of this embodiment, it is an example that the direction indicated by arrow W is the direction in which the robot 8 enters the guidance device. It may be understood that the robot may also enter the guidance device from other directions in practical use.

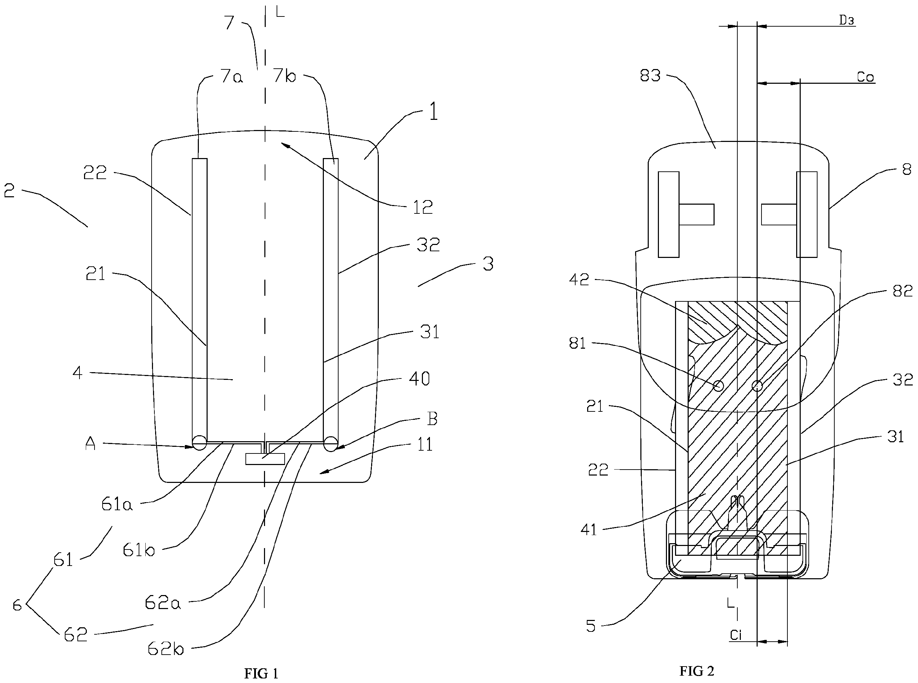

As shown in FIGs. 1, 2, 3, and 6, FIGs. 2, 3, and 6 are schematic diagrams of application of a guidance device in charging. The guidance device includes a pair of guidance cables 2 and 3, which may be disposed on a base plate 1 and embedded in the base plate 1. The base plate 1 has a valid docking region 41 and an invalid docking region 42 connected or adjacent to the valid docking region 41. The guidance cables 2 and 3 are disposed symmetrically relative to a centerline L, and are spaced apart from each other to form a spacing region 4. In this embodiment, the centerline L coincides with a central axis of the base plate 1. In other embodiments , the centerline L is spaced parallel to the central axis of the base plate 1. The valid docking region 41 is located in the spacing region 4, and magnetic fields formed by current in the guidance cables 2 and 3 in the valid docking region 41 are used to guide the robot 8 to move and adjust its heading. Current is introduced into the guidance device to generate a working magnetic field. When the robot 8 moves in a direction perpendicular to the centerline L from the outside to the inside of the spacing region 4, a non-working magnetic field and a working magnetic field generated by the guidance device are sequentially detected, where directions of the working magnetic field and the non-working magnetic field are opposite. The working magnetic field is generated by superposition of the magnetic fields generated by the guidance cables 2 and 3, and the region where the working magnetic field is located includes the valid docking region 41 and the invalid docking region 42. Ideally, a range of the working magnetic field overlaps with that of the spacing region 4. In some cases, the range of the working magnetic field may alternatively be larger than that of the spacing region 4. In this embodiment, the range of the working magnetic field is smaller than that of the spacing region 4, and is within that of the spacing region 4. In other embodiments, the range of the working magnetic field may be adjusted by adjusting the distance between the guidance cables 2 and 3, the distance between guidance wire segments 21 and 22 described below, the distance between guidance wire segments 31 and 32 described below, and the like.

Understandably, in other embodiments, the magnetic field generated in the invalid docking region 42 may also guide the robot, that is, sensors on the robot 8 may be guided when detecting the magnetic field in the invalid docking region 42. In this case, the robot is guided as long as the detected magnetic field is a working magnetic field, and is not limited to the magnetic field in the valid docking region 41.

The guidance wire 2 includes a pair of electrically connected guidance wire segments 21 and 22, which are disposed opposite and spaced apart from each other. The guidance wire 3 includes a pair of electrically connected guidance wire segments 31 and 32, which are disposed opposite and spaced apart from each other. A direction in which the guidance wire segments 21 and 22 are spaced apart is consistent with a direction in which the guidance wire segments 31 and 32 are spaced apart. Directions of current in the two adjacent guidance wire segments 21 and 22 in the guidance wire 2 are opposite, and directions of current in the two adjacent guidance wire segments 31 and 32 in the guidance wire 3 are opposite. Directions of current in two guidance wire segments symmetrical relative to the centerline L are opposite. That is, the guidance wire segment 21 and the guidance wire segment 31 are symmetrical relative to the centerline L, and the directions of current in the guidance wire segment 21 and the guidance wire segment 31 are opposite. The guidance wire segment 22 and the guidance wire segment 32 are symmetrical relative to the centerline L, and the directions of current in the guidance wire segment 22 and the guidance wire segment 32 are opposite. It is understandable that there may be 3, 4, or 5 guidance wire segments in a guidance wire, but the directions of current in two adjacent guidance wire segments are opposite.

In other embodiments, the directions of current in the guidance wire segment 21 and the guidance wire segment 31 may also be the same.

Further, as shown in FIGs. 1, 2, 3, and 6, FIGs. 2, 3, and 6 are schematic diagrams of application of a guidance device in charging. The guidance wire segment 21 and the guidance wire segment 31, which are closer to the centerline L, are inner guidance wire segments, while the guidance wire segment 22 and the guidance wire segment 32, which are farther from the centerline L, are outer guidance wire segments. A pair of sensors 81 and 82 are disposed on the robot 8. The sensors 81 and 82 are used to detect the working magnetic field generated in the guidance device and control the robot to adjust its heading according to the detected working magnetic field. When the pair of sensors 81 and 82 are disposed symmetrically relative to the centerline L, the distances between the sensor 82 and the guidance wire segment 32 and the guidance wire segment 31 that are located on the same side of the centerline L as the sensor 82 are C0 and Ci, respectively; and the distances between the sensor 82 and the guidance wire segment 22 and the guidance wire segment 21 that are located on two sides of the centerline L are F0 and Fi, respectively, where Ci<C0≤Fi<*Fo*, 1/2C0≤Ci≤4/5C0, and 1/2Fi≤C0<Fi. Preferably, C0≤2/3Fi. Optionally, 1/2C0≤Ci. Optionally, 2/3C0≤Ci. Preferably, Ci≤4/5C0. Further, when the pair of sensors 81 and 82 are at symmetrical positions relative to the centerline, the distance between the sensor 82 and the centerline L is D3, where 1/2Ci≤D3≤1/2C0. Preferably, D3=45 mm, Ci=70 mm, C0=100 mm, Fi=160 mm, and *Fo*=190 mm. It should be understood that the distances between the sensor 81 and the guidance wire segments may be the same as those between the sensor 82 and the guidance wire segments.

From the foregoing content, a pair of guidance cables is provided, with each including a pair of electrically connected guidance wire segments. When current is introduced into one of the guidance cables, the directions of the current passing through the guidance wire segments of the guidance wire are opposite, and a magnetic field is generated in the spacing region. Similarly, when current is introduced into the other guidance wire, the directions of the current passing through the guidance wire segments of the guidance wire are also opposite, and a magnetic field is generated in the spacing region to guide the robot 8 to move and adjust its heading. In addition, the guidance device has a simple structure and may be used in more environments without being too limited in layout, and the robot 8 is guided by the guidance device when adjusting its heading, so that the heading is accurately adjusted and more accurate positioning is achieved without colliding with other docking components. Moreover, the directions of current in the two guidance wire segments, which are symmetrical relative to the centerline L, in the two guidance cables are opposite, so that the two guidance cables generate magnetic fields in same directions in the spacing region, to ensure stable magnetic fields in the spacing region.

As shown in FIG. 1 to FIG. 9, the guidance device has a first end 11 and a second end 12 along extension directions of the guidance cables 2 and 3. The guidance device includes a first functional portion 6 connected to sides of the guidance cables 2 and 3 facing the first end 11, and a second functional portion 7 connected to sides of the guidance cables 2 and 3 facing the second end 12, where the first functional portion 6 and the second functional portion 7 construct the guidance wire segments 21, 22, 31, and 32 of the guidance cables into an electrical circuit. The guidance device includes a first functional portion 6 connected to a side of the guidance wire 3 facing the first end 11, and a second functional portion 7 connected to a side of the guidance wire 3 facing the second end 12, where the first functional portion 6 and the second functional portion 7 construct the pair of guidance wire segments 31 and 32 of the guidance wire into an electrical circuit. In an embodiment, a component to be docked is disposed at the vicinity of the first functional portion 6. Because the magnetic field generated by the first functional portion 6 superposes with the magnetic fields generated by the guidance cables 2 and 3, a magnetic field feature that may be identified by the robot 8 is provided at the vicinity of the first functional portion 6. When the robot 8 moves to the vicinity of the first functional portion 6 in the spacing region, the robot 8 further slows down to avoid collision with the component to be docked. In addition, when the robot 8 works outside the guidance device and detects the magnetic field generated by the first functional portion 6, the robot 8 may also evade the magnetic field to avoid collision.

Because the first functional portion and the second functional portion are different, the guidance device has different embodiments.

In an embodiment as shown in FIG.1, two first functional portions 6 are provided, respectively a first functional portion 6a and a first functional portion 6b. Ends of the guidance wire segments 21 and 22 facing the first end 11 are connected with the first functional portion 6a, and ends of the guidance wire segments 31 and 32 facing the first end 11 are connected with the first functional portion 6b. Both the first functional portion 6a and the first functional portion 6b extend towards the centerline L and are electrically connected to a control module 40. The first functional portion 6a includes a pair of first wire segments 61a and 62a, which are electrically connected to a pair of guidance wire segments 21 and 22, respectively. The first wire segments 61a and 62a overlap at least partially, and directions of current in the first wire segments 61a and 62a are opposite, which may offset a magnetic field generated by the overlapping portion in the first wire segments 61a and 62a, thereby reducing or eliminating interference to the robot 8 when detecting a magnetic field of the first functional portion 6a. Similarly, the first functional portion 6b includes first connecting wire segments 61b and 62b connecting a pair of guidance wire segments 31 and 32. The first connecting wire segments 61b and 62b overlap at least partially, and directions of current in the first wire segments 61b and 62b are opposite, which may offset a magnetic field generated by the overlapping portion in the first wire segments 61b and 62b, thereby reducing or eliminating interference to the robot 8 when detecting a magnetic field of the first functional portion 6b. It may be understood that the first wire segments 61a and 62a may not overlap, and the first wire segments 61b and 62b may also not overlap, that is, different distances between a pair of first wire segments are constructed, so that the first functional portions 6a and 6b generate different magnetic field strengths when supplied with current. Portions A and B circled in the first functional portion 6 may generate magnetic field features that may be identified by the robot 8. In the case where the first wire segments 61a and 62a in the first functional portion 6 do not overlap, magnetic fields that may be detected by the robot 8 may also be generated, and the same applies to the first wire segments 61b and 62b. As the robot 8 approaches, a higher magnetic field strength generated by the first functional portion 6 may be detected. When the detected magnetic field strength is equal to a preset value, the robot 8 may stop or retreat.

Two second functional portions 7 may also be provided, respectively second functional portions 7a and 7b. The second functional portions 7a and 7b are both second connecting wire segments. The second functional portion 7a is electrically connected to ends of the guidance wire segments 21 and 22 facing the second end 12, and the second functional portion 7b is electrically connected to ends of the guidance wire segments 31 and 32 facing the second end 12, to form an electrical circuit as shown in the figure. The second functional portions 7a and 7b are straight segments. Sharp corners, approximately right angles in this embodiment, are formed at the corners connecting the second functional portion 7a with the guidance wire segments 21 and 22. Sharp corners, approximately right angles in this embodiment, are formed at the corners connecting the second functional portion 7b with the guidance wire segments 31 and 32. The second functional portions 7a and 7b interfere with the magnetic fields generated by the guidance cables 2 and 3 in a first region to form the invalid docking region 42, that is, there is the invalid docking region 42 between the portion of the guidance wire 2 facing the second functional portion 7a and the portion of the guidance wire 3 facing the second functional portion 7b. However, the magnetic field pattern in the invalid docking region 42 cannot guide the robot 8. The valid docking region 41 is connected to the invalid docking region 42 in the spacing region 4. The magnetic fields that are generated by the guidance cables 2 and 3 in the valid docking region 41 are farther from the second functional portion 7, which are not subjected to the interference of the second functional portions 7a and 7b, and are regular magnetic fields that may guide the robot 8. After the magnetic field in the valid docking region 41 is detected out, the movement trajectory of the robot 8 is adjusted according to the detected magnetic field in the valid docking region 41.

In another embodiment shown in FIG. 4, one first functional portion 6 may alternatively be provided. The first functional portion 6 includes a pair of first wire segments 61 and 62 extending along the same direction. Two ends of the first wire segment 61 are connected to the guidance wire segment 21 and the guidance wire segment 31, and two ends of the first wire segment 62 are connected to the guidance wire segment 22 and the guidance wire segment 32, that is, two guidance wire segments symmetrical relative to the centerline L are connected to the same first wire segment. A main control module is disposed in the first wire segment 61 or the second wire segment 62. The second functional portion 7 consists of two functional portions 7c and 7d, which are arc segments. In this case, the corners connecting the second functional portion 7c with the guidance wire segments 21 and 22 are not sharp corners, and the corners connecting the second functional portion 7d with the guidance wire segments 31 and 32 are also not sharp corners, resulting in less interference to the magnetic field generated between the guidance cables 2 and 3, so that the range of the invalid docking region 42 is reduced, and the valid docking region 41 is enlarged. The robot 8 has a larger distance of travel to adjust its heading, and docking of the robot 8 is more accurate. It should be understood that one of the second functional portions 7c and 7d may alternatively be an arc wire segment and the other may alternatively be a straight wire segment in the embodiment shown in the figure.

In the embodiment shown in FIG. 5, the second functional portions 7 are further improved. Two second functional portions 7 are provided, respectively second functional portions 7e and 7f, which are spaced apart from each other. The second functional portion 7e includes a pair of second wire segments 71e and 72e that extend obliquely towards the centerline L. The second wire segment 71e is connected to the guidance wire segment 21, and the second wire segment 72e is connected to the guidance wire segment 22. The second functional portion 7f includes a pair of second wire segments 71f and 72f that extend obliquely towards the centerline L. The second wire segment 71f is connected to the guidance wire segment 21, and the second wire segment 72f is connected to the guidance wire segment 22. End arc wire segments of the second wire segments 71e and 72e are connected, and end arc wire segments of the second wire segments 71f and 72f are connected. Accordingly, there is no sharp angle transition in the connection state between the second functional portion 7e and the guidance wire 2, and there is also no sharp angle transition in the connection state between the second functional portion 7f and the guidance wire 3. In the structure shown in the figure, the range of the invalid docking region 42 is smaller, and the range of the valid docking region 41 in the spacing region is larger, which is more conducive to the heading adjustment of the robot 8.

Further, as shown in FIG. 5 and FIG. 6, FIG. 6 is a schematic diagram of application of the guidance device in FIG. 5 to a charging station. The guidance wire 2 and the second functional portion 7e are used as an example. The distance between the guidance wire segments 21 and 22 is D1 and the second wire segments 71e and 72e are parallel, and the distance between the second wire segments 71e and 72e is D2. Further, the angle between the guidance wire segment 21 and the second wire segment 71e is α, and 90°<α<180°. Optionally, 90°<α≤135°. Optionally, 100°<α≤135°. It should be understood that the distance and angle relationship between the guidance wire 3 and the second functional portion 7f may also be the same. It may be understood that the structures of the first functional portion 6 and the second functional portion 7 in the embodiments of FIGs. 1, 4, and 5 may be replaced and combined with each other.

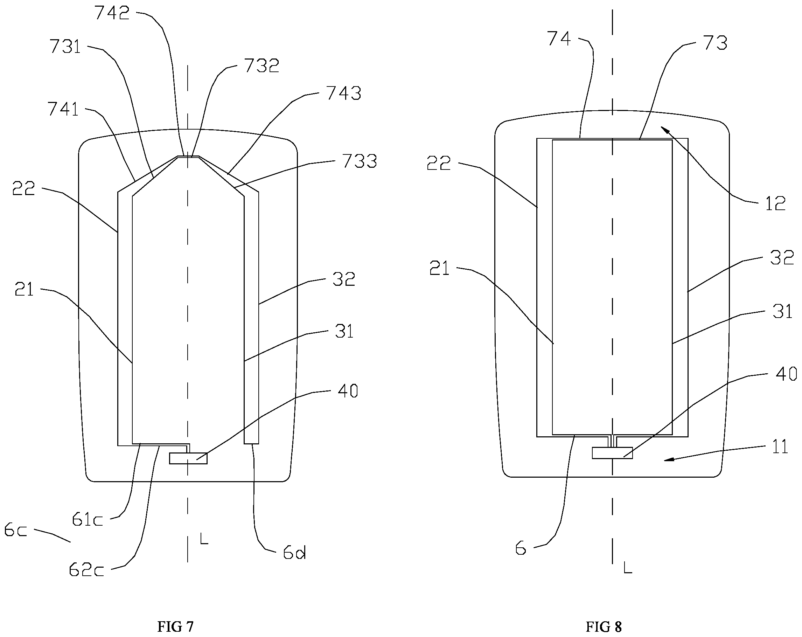

In another embodiment shown in FIG. 7, two first functional portions 6 are provided, respectively first functional portions 6c and 6d. The first functional portion 6c includes a pair of first wire segments 61c and 62c extending along the same direction, and the first wire segment 61c is connected to the guidance wire segment 21, and the first wire segment 62c is connected to the guidance wire segment 22. The first functional portion 6d is a first connecting wire segment connecting a pair of guidance wire segments 31 and 32. The control module 40 may be electrically connected to the first wire segments 61c and 62c. One second functional portion 7 is provided and connected to a pair of guidance cables 2 and 3. The first wire segments 61c and 62c may be separated or overlap. By changing the distance between the first wire segments 61c and 62c, the first functional portion 6c generates different magnetic field strengths when supplied with current.

Further, in the embodiment shown in FIG. 7 and FIG. 8, the second functional portion 7 includes a pair of second wire segments 73 and 74, and the pair of second wire segments 73 and 74 are disposed opposite. The second wire segment 73 is connected to the guidance wire segment 21 and the guidance wire segment 31, and the second wire segment 74 is connected to the guidance wire segment 22 and the guidance wire segment 32, that is, two guidance wire segments symmetrical relative to the centerline L are connected to the same second wire segment.

As shown in FIG. 7, the second wire segment 73 has a first inclined portion 731, a horizontal portion 732, and a second inclined portion 733 that are sequentially connected. The first inclined portion 731 is connected to the guidance wire segment 21, and the second inclined portion 733 is connected to the guidance wire segment 31. The second wire segment 74 has a first inclined portion 741, a horizontal portion 742, and a second inclined portion 743 that are sequentially connected. The first inclined portion 741 is connected to the guidance wire segment 22, the second inclined portion 743 is connected to the guidance wire segment 32, and the horizontal portion 732 overlaps the horizontal portion 742 to counteract the magnetic field. Accordingly, there is no sharp angle transition in the connection state between the second functional portion and the guidance cables 2 and 3. In the structure shown in the figure, the range of the invalid docking region 42 is smaller, and the range of the valid docking region 41 in the spacing region is larger, which is more conducive to the heading adjustment of the robot 8. It may be understood that as shown in FIG. 8, the second wire segments 73 and 74 may also be partially overlapping straight guidance wire segments.

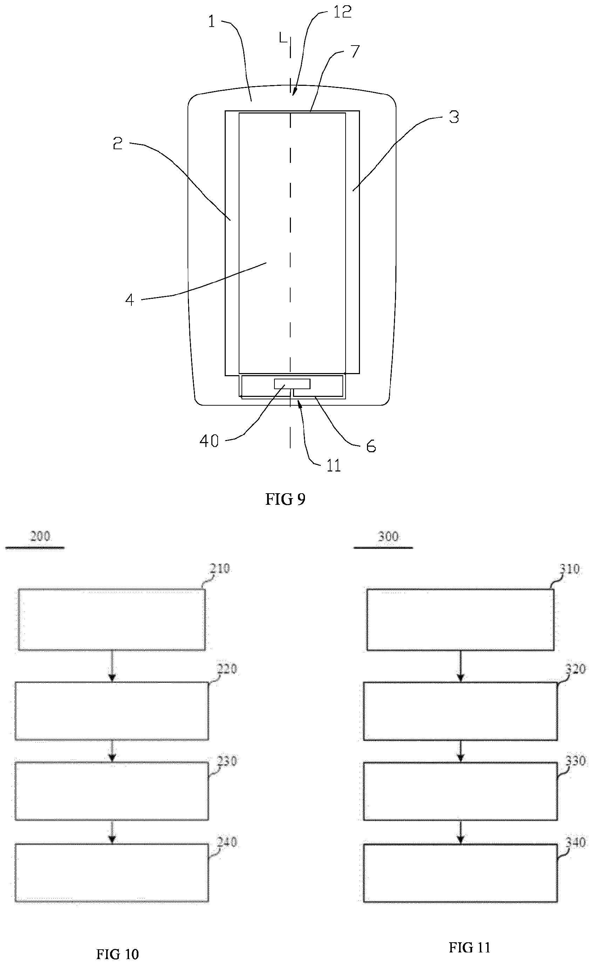

From the foregoing different embodiments, it may be seen that when the guidance device is different, the first functional portion and the second functional portion may be correspondingly changed, namely, there may be one or two first functional portions and one or two second functional portions. Moreover, in other embodiments, the first functional portion 6 may alternatively be constructed as shown in FIG. 9, where the first functional portion 6, the second functional portion 7, and the guidance cables 2 and 3 are connected to form an electrical circuit, and a different guidance device structure is constructed. The magnetic fields generated by the first functional portions 6 in the guidance devices of different embodiments may prompt the robot 8 to prevent the robot 8 from colliding with a component to be docked. Details are not described herein again.

Relevant technical details in the guidance devices of the foregoing embodiments may be used interchangeably.

A second embodiment of the present disclosure further provides a heading adjustment method for a robot. As shown in FIGs. 2, 3, 6, and 10, in the robot guidance device, the heading adjustment method 200 includes the following steps.

At step 210, a magnetic field signal, detected by at least one sensor, of a working magnetic field generated by the guidance device is received.

At step 220, the robot is controlled to move a preset distance or preset duration. Specifically, as shown in FIG. 6, when the guidance device is used, the robot 8 moves from the second end 12 of the guidance device to the first end 11, the invalid docking region 42 is located on the side where the second end 12 is located, and the working magnetic field generated by the guidance device, which is first detected by the sensor of the robot 8, is the magnetic field in the invalid docking region 42. In different guidance device, the coverage of the invalid docking region 42 is also different. The range of the invalid docking region 42 may be known according to the type of the guidance device (namely, the length of the invalid docking region may be known), to obtain the distance that the robot 8 travels after detecting the magnetic field in the invalid docking region 42, and the magnetic field detected after the robot 8 moves the distance is the magnetic field in the valid docking region 41. Therefore, the robot 8 may move the preset distance after detecting the magnetic field in the invalid docking region 42, and the magnetic field detected after moving the preset distance is the magnetic field in the valid docking region 41. In addition, the movement duration of the robot 8 may alternatively be controlled. The robot 8 just enters the valid docking region 41 after moving the preset duration.

At step 230, a pair of sensors of the robot 8 is controlled to obtain a current working magnetic field after the robot 8 moves the preset distance or preset duration. Specifically, the robot 8 enters the valid docking region 41, and the pair of sensors of the robot 8 obtains the current working magnetic field as the magnetic field in the valid docking region 41.

At step 240, a bias direction of the robot 8 is adjusted based on an obtained magnetic field strength ratio in the valid docking region 41.

Further, when the magnetic field strength ratio in the valid docking region 41, which is obtained by the pair of sensors of the robot 8, is not equal to a preset magnetic field strength ratio, the movement trajectory of the robot 8 is adjusted to the preset trajectory.

In addition, after step 230 and before step 240, a step may also be performed to control the robot to reduce its current speed, so that the robot 8 has enough time to adjust its heading at step 240.

Specifically, the preset magnetic field strength ratio is a ratio of a magnetic field strength obtained by the sensor 81 to a magnetic field strength obtained by the sensor 82 when the robot 8 does not yaw. In this embodiment, when the ratio of the magnetic field strength obtained by the sensor 81 to the magnetic field strength obtained by the sensor 82 is less than the preset magnetic field strength ratio, the robot's movement trajectory is biased to the right and needs to be adjusted to the left. When the ratio of the magnetic field strength obtained by the sensor 81 to the magnetic field strength obtained by the sensor 82 is greater than the preset magnetic field strength ratio, the robot's movement trajectory is biased to the left and needs to be adjusted to the right. When the ratio of the magnetic field strength obtained by the sensor 81 to the magnetic field strength obtained by the sensor 82 is equal to the preset magnetic field strength ratio, the heading of the robot 8 is normal. The relationship between the ratio of magnetic field strengths and the yawing direction is related to the direction of current in the guidance wire.

Preferably, as an example, when the sensors 81 and 82 of the robot 8 are disposed symmetrically on two sides of the centerline L, the robot 8 may be docked to a desired docking place. In this case, the preset magnetic field strength ratio is 1. Understandably, when the sensors 81 and 82 of the robot 8 are disposed asymmetrically on two sides of the centerline L in a regular route, the preset magnetic field strength ratio is not 1.

Further, the heading adjustment method includes: controlling the robot 8 to reduce the current moving speed in the process of executing step 240 based on the magnetic field generated by the first functional portion, which is detected by the at least one sensor of the robot 8.

In other embodiments, as shown in FIG. 11, a heading adjustment method 300 for a robot includes the following steps.

At step 310, a magnetic field signal, detected by at least one sensor, of a working magnetic field generated by the guidance device is received.

At step 320, the heading of the robot 8 is adjusted and the robot 8 is controlled to move a preset distance or preset duration based on the working magnetic field generated by the guidance device. That is, the robot 8 first detects out a magnetic field in the invalid docking region 42, and then adjusts the heading of the robot based on the magnetic field in the invalid docking region.

In this embodiment, the sensor of the robot 8 may first detect out the magnetic field in the invalid docking region 42. When the ratio of the magnetic field strength in the invalid docking region 42 obtained by the sensor 81 to the magnetic field strength in the invalid docking region 42 obtained by the sensor 82 is less than the preset magnetic field strength ratio, the robot's movement trajectory is biased to the left and needs to be adjusted to the right. When the ratio of the magnetic field strength obtained by the sensor 81 to the magnetic field strength obtained by the sensor 82 is greater than the preset magnetic field strength ratio, the robot's movement trajectory is biased to the right and needs to be adjusted to the left. When the ratio of the magnetic field strength obtained by the sensor 81 to the magnetic field strength obtained by the sensor 82 is equal to the preset magnetic field strength ratio, the heading of the robot 8 is normal.

At step 330, a pair of sensors of the robot 8 is controlled to obtain a current working magnetic field after the robot 8 moves the preset distance or preset duration. Specifically, the robot 8 enters the valid docking region 41, and the pair of sensors of the robot 8 obtains the current working magnetic field as the magnetic field in the valid docking region 41.

At step 340, a bias direction of the robot 8 is adjusted based on an obtained magnetic field strength ratio in the valid docking region 41. Specifically, the heading adjustment method for the robot in the valid docking region 41 is consistent with step 230.

In addition, the robot 8 is controlled to reduce the current moving speed in the process of executing step 340 based on the magnetic field generated by the first functional portion, which is detected by the at least one sensor of the robot 8.

The steps of the foregoing methods are divided only for clarity of description. When implemented, the steps may be combined into one step or some steps may be split into a plurality of steps, and the implementations fall within the protection scope of this present disclosure as long as the steps include the same logical relationship. Inessential modifications added or inessential designs introduced to the algorithms or processes without changing the core designs of the algorithms or processes all fall within the protection scope of this present disclosure.

It is not difficult to find that this embodiment is a system embodiment corresponding to the first embodiment, and may be implemented cooperatively with the first embodiment. The relevant technical details mentioned in the first embodiment are still valid in this embodiment, and are not described herein again in order to reduce repetition. Correspondingly, the relevant technical details mentioned in this embodiment may also be applied to the first embodiment.

A third embodiment of the present disclosure further provides a charging station. As shown in FIGs. 2, 3, and 6, the charging station includes a base plate 1, a charging terminal 5, and any of the guidance devices in the foregoing embodiments. The charging terminal 5 is disposed on the side where the first end 11 is located, and the robot 8 moves from the second end 12 to the first end 11 until a charging port of the robot 8 is docked with the charging terminal 5.

Because the second embodiment corresponds to this embodiment, this embodiment may be implemented cooperatively with the first embodiment. Relevant technical details mentioned in the second embodiment are still valid in this embodiment, and the technical effects that can be achieved in the second embodiment may also be achieved in this embodiment. In order to reduce repetition, details are not described herein again. Correspondingly, relevant technical details mentioned in this embodiment may also be applied to the second embodiment.

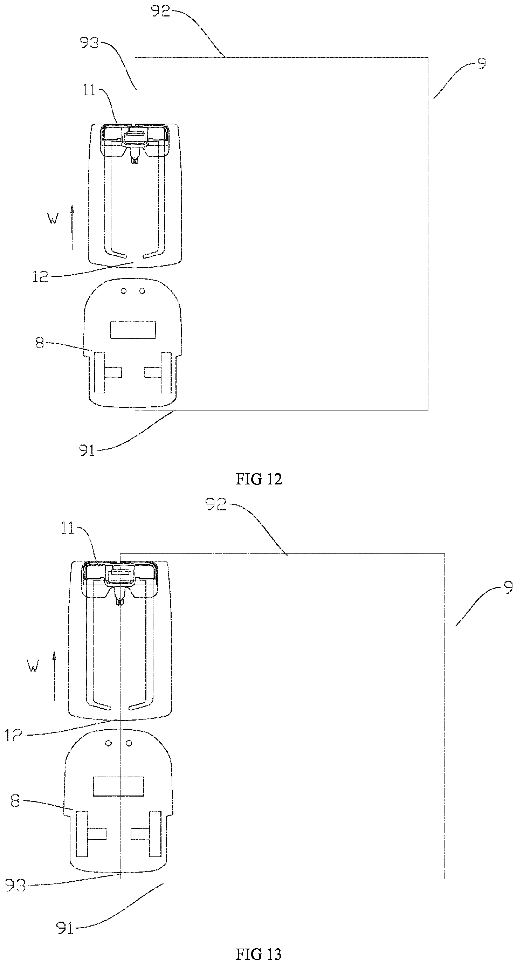

A fourth embodiment of the present disclosure further provides a robot system. As shown in FIG. 12 and FIG. 13, the robot system includes a robot 8, a boundary 9, and a charging station in the third embodiment. Different guidance devices are constructed into different charging stations, and different charging stations may be used in different robot systems. A work area for the robot 8 is encloses by the boundary 9, and a pair of sensors 81 and 82 are disposed on the robot 8. The guidance device at the charging station cooperates with the boundary 9 to guide the robot 8 to adjust its movement trajectory until the robot 8 is docked with the charging terminal 5 of the charging station.

Specifically, as shown in FIG. 12 and FIG. 13, when the robot 8 is waiting to charge, the robot 8 searches for the boundary 9. After at least one sensor of the robot 8 detects the boundary 9, the robot 8 is guided by signals along the boundary 9 to move. After directly detecting the magnetic field of the guidance device at the charging station, the robot 8 travels according to the heading adjustment method in the second embodiment. In addition, when the robot 8 detects the magnetic field in the invalid docking region 42, the robot 8 is guided by the signals along the boundary 9 to move. After moving a preset distance or preset duration, the robot 8 moves and adjusts its heading according to the magnetic field in the valid docking region 41.

The boundary 9 may be physical, typically such as a wall, a fence, or a railing. The boundary 9 may alternatively be virtual, typically such as virtual boundary 9 signals given by a boundary 9 signal generation device, where the virtual boundary 9 signals are generally electromagnetic signals or optical signals. Alternatively, for a positioning device (such as a GPS), the boundary 9 is a virtual boundary 9 disposed in an electronic map exemplarily formed by two- or three-dimensional coordinates. In this embodiment, the boundary 9 is constructed as a closed loop power-on wire, which generates a guidance magnetic field to guide the movement of the robot 8 after being powered on.

In some embodiments, as shown in FIG. 12, the charging station is disposed on the boundary 9. Specifically, the charging station has a front end side (on the same side as the second end 12) for the robot 8 to enter and exit and a rear end side (on the same side as the first end 11) opposite to the front end side, and a pair of guidance cables 2 and 3 in the charging station extend from the front end side (on the same side as the second end 12) to the rear end side (on the same side as the first end 11). The boundary 9 has a first side edge 91, a second side edge 92 opposite to the first side edge 91, and a third side edge 93 connecting the first side edge 91 and the second side edge 92. The charging station is disposed on the third side edge 93. When the robot 8 travels towards the charging station along the boundary to the third side edge 93, a tail end 83 of the robot 8 faces the first side edge 91, and a head end 84 of the robot 8 faces the second side edge 92.

Preferably, as shown in FIG. 12, there is a corner between the third side edge 93 and the second side edge 92, and the distance between the rear end side of the charging station and the corner is not less than 1 m, that is, there is a roughly straight boundary line at least 1 meter long on the rear end side of the charging station. In the application of the guidance device in various embodiments, the magnetic field generated by the first functional portion of the guidance device is not affected by the magnetic field generated at the corner where the third side edge 93 and the second side edge 92 are connected.

Further, as shown in FIG. 13, the rear end side of the charging station (on the same side as the first end 11) may be alternatively disposed near the corner where the third side edge 93 and the second side edge 92 are connected. After entering the charging station, the heading adjustment and movement of the robot 8 are based on the working magnetic field generated by the guidance device. Therefore, even if the robot 8 is close to the second side edge 92, the normal movement and heading adjustment of the robot 8 are not affected.

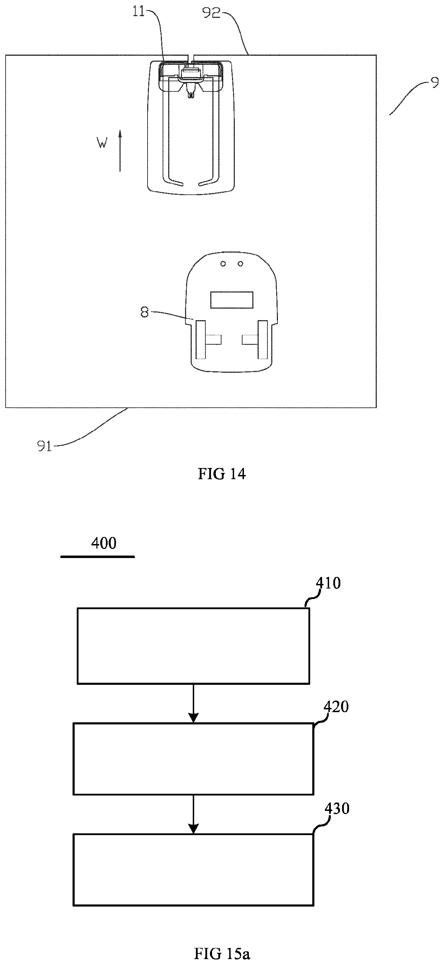

In some embodiments, as shown in FIG. 14, the charging station is disposed within the boundary 9.

A fifth embodiment of the present disclosure further provides a control method for a robot system, which is applied to the robot system in the fourth embodiment. As shown in FIG. 15a, the control method includes the following steps.

At step 410, in response to a charging instruction, the robot 8 is controlled to search for the boundary 9 and move along the found boundary 9.

At step 420, a magnetic field signal, detected by at least one sensor, of a working magnetic field is received; and

At step 430, the heading of the robot 8 is adjusted based on the working magnetic field generated by the guidance device until the robot 8 is docked with the charging terminal 5 of the charging station. After step 420 and before step 430, a step is performed to control the robot to move a preset distance or preset duration. Specifically, the heading of the robot is adjusted through the heading adjustment method 200 in the second embodiment until the robot is docked with the charging terminal 5 of the charging station, and details are not repeated here.

Understandably, in other embodiments, the heading of the robot may alternatively be adjusted through the heading adjustment method 300 in the second embodiment until the robot is docked with the charging terminal 5 of the charging station, and details are not repeated here.

Further, when at least one sensor of the robot 8 detects the working magnetic field generated by the guidance device, the robot is controlled to reduce the current moving speed. Specifically, the robot 8 may reduce the current speed when detecting the working magnetic field in the invalid docking region 42, or the robot 8 does not reduce its speed when detecting the working magnetic field in the invalid docking region 42, but when the robot 8 detects the working magnetic field in the valid docking region 41 after the robot 8 is controlled to move the preset distance or preset duration, the robot 8 is controlled to reduce the current speed. Therefore, the robot 8 is prevented from colliding with the charging terminal 5 of the charging station, and enough time may also be provided for the robot 8 to adjust its heading.

In addition, during the operation of the robot 8, when the magnetic field generated by the first functional portion of the guidance device is detected out, the robot 8 may reduce the current speed. When the detected magnetic field is greater than a preset value, the robot is too close to the charging station, and the robot needs to retreat from the charging station in this case. The steps of the foregoing methods are divided only for clarity of description. When implemented, the steps may be combined into one step or some steps may be split into a plurality of steps, and the implementations fall within the protection scope of this present disclosure as long as the steps include the same logical relationship. Inessential modifications added or inessential designs introduced to the algorithms or processes without changing the core designs of the algorithms or processes all fall within the protection scope of this present disclosure.

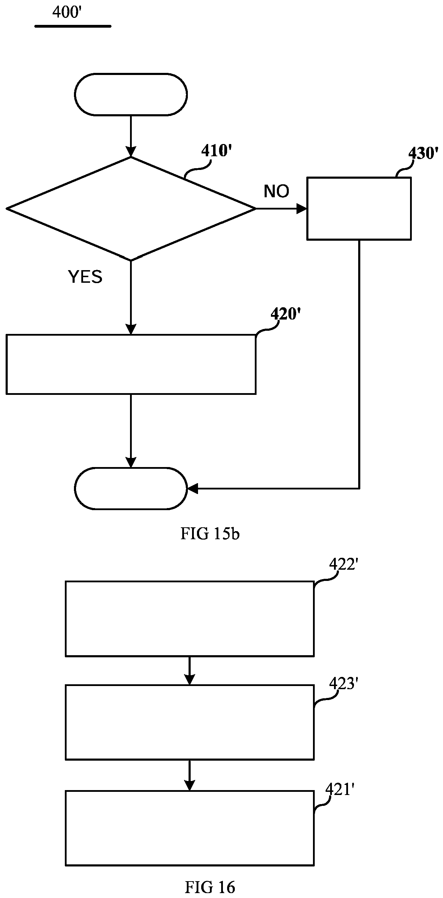

A sixth embodiment of the present disclosure further provides a control method for a robot system. The robot system shown in FIG. 14 is used as an example. The charging station is located within the boundary 9. As shown in FIG. 15b, the control method 400' includes the following steps.

At step 410', the robot 8 is in a working state, and when the robot 8 approaches the charging station, whether the robot 8 needs to enter the charging station is determined, for example, whether the robot 8 needs to be charged or whether the time is close to the working end time (for example, the time is less than a time threshold, typically 60 minutes) is determined.

If the robot 8 needs to enter the charging station, step 420' is performed, and the robot enters a regression state. Specifically, the regression state refers to a state in which the robot 8 travels towards the charging station for the purpose of docking and charging. Generally, the robot 8 does not perform tasks such as mowing in the regression state. Instead, the heading adjustment method for a robot in the second embodiment may be performed, and the robot 8 is enabled to enter the guidance device and dock with the charging terminal 5.

Further, the occurrence of the robot 8 approaching the charging station is based on the working magnetic field, detected by at least one sensor, of the guidance device, that is, the working magnetic field detected by the sensor mentioned in the foregoing embodiments. Understandably, in other embodiments, a ranging device such as an infrared sensor, an ultrasonic sensor, or a visual sensor may alternatively be disposed on the robot to detect the position of the charging station and determine the distance between the robot and the charging station. The distance between the robot and the charging station is less than or equal to a preset distance as the occurrence of the robot 8 approaching the charging station. In other embodiments, a positioning device such as GNSS, UWB, or LIDAR is disposed on the robot to detect the current position of the robot and calculate the distance between the robot and the charging station. Similarly, the distance between the robot and the charging station is less than or equal to a preset distance as the occurrence of the robot 8 approaching the charging station.

As shown in FIG. 16, at step 420', the robot enters a regression state, which specifically includes the following steps: At step 421', the heading of the robot 8 is adjusted based on an alignment guidance mechanism until the robot 8 is docked with the charging terminal 5. In this embodiment, the alignment guidance mechanism indicates that the robot 8 adjusts its heading according to the working magnetic field, so that the charging port of the robot 8 is successfully aligned and connected with the charging terminal 5. In other embodiments, the alignment guidance mechanism may alternatively indicate that the robot 8 adjusts its heading according to an infrared signal, an ultrasonic signal, a visual signal, or the like emitted by the charging station. The specific methods for adjusting the heading are well known to those skilled in the art, so details are not repeated.

Further, before the heading of the robot is adjusted based on the working magnetic field until the robot is docked with the charging terminal at step 421', the method includes:

At step 422', the robot moves towards the charging terminal for a preset distance or preset duration.

Further, after the robot moves towards the charging terminal for a preset distance or preset duration at step 422', and before the heading of the robot is adjusted based on the working magnetic field until the robot is docked with the charging terminal at step 421', the method further includes the following steps.

At step 423', the robot reduces the current moving speed. The robot 8 does not reduce its speed when detecting the working magnetic field in the invalid docking region 42, but when the robot 8 detects the working magnetic field in the valid docking region 41 after the robot 8 is controlled to move the preset distance or preset duration, the robot 8 is controlled to reduce the current speed.

Optionally, step 421' includes adjusting the movement trajectory of the robot to the preset trajectory when the strength ratio of working magnetic fields obtained by a pair of sensors of the robot 8 is not equal to a preset magnetic field strength ratio. Understandably, in other embodiments, the heading of the robot 8 may alternatively be adjusted through the relationship between the difference in the working magnetic fields obtained by the pair of sensors and a preset value.

In addition, when the robot enters the regression state, the robot reduces the current moving speed. Specifically, the robot 8 reduces the current speed when entering the regression state and first detecting the working magnetic field in the invalid docking region 42. Therefore, the robot 8 is prevented from colliding with the charging terminal 5 of the charging station, and enough time may also be provided for the robot 8 to adjust its heading. Further, if the robot 8 does not need to enter the charging station at step 410', the robot 8 is controlled to avoid the charging station and continues to perform original set work at step 430'.

Further, step 410' specifically includes the following step.

At step 411', whether power of the robot 8 is less than or equal to a first threshold is detected; and

if the power of the robot 8 is not less than or equal to the first threshold, the robot 8 does not need to be charged, and step 430' is performed; or
if the power of the robot 8 is less than or equal to the first threshold, the robot 8 needs to be charged, and step 420' is performed.

Further, when the power of the robot is equal to or lower than a second threshold, the robot enters a regression state, where the first threshold is higher than the second threshold. Specifically, the second threshold is the set minimum power value. When the power of the robot 8 is equal to or lower than the second threshold, that is, the power is severely insufficient, the robot 8 in any state, namely, in a stop state, a working state, or other state, needs to enter a regression state. The robot 8 needs to enter the regression state, but the working magnetic field of the charging station has not been detected out. The robot 8 is controlled to search for the boundary and move along the found boundary. After the robot 8 detects the working magnetic field emitted by the guidance device during movement along the boundary, the heading of the robot 8 is adjusted according to the heading adjustment method 200 in the second embodiment until the robot 8 is docked with the charging terminal 5 of the charging station. When the power of the robot 8 is equal to or lower than the second threshold, the robot 8 detects out the working magnetic field of the charging station. In this case, the heading of the robot 8 is adjusted according to the heading adjustment method 200 in the second embodiment until the robot 8 is docked with the charging terminal 5 of the charging station. In other embodiments, the heading of the robot 8 may alternatively be adjusted according to the heading adjustment method 300 in the second embodiment until the robot 8 is docked with the charging terminal 5 of the charging station.

In addition, during the operation of the robot 8, when the magnetic field generated by the first functional portion of the guidance device is detected out, the robot 8 may reduce the current speed. When the detected magnetic field is greater than a preset value, the robot is too close to the charging station, and the robot needs to retreat from the charging station in this case.

The method details in this embodiment are consistent with those in the second embodiment and will not be detailed here.

The steps of the foregoing methods are divided only for clarity of description. When implemented, the steps may be combined into one step or some steps may be split into a plurality of steps, and the implementations fall within the protection scope of this present disclosure as long as the steps include the same logical relationship. Inessential modifications added or inessential designs introduced to the algorithms or processes without changing the core designs of the algorithms or processes all fall within the protection scope of this present disclosure.

A seventh embodiment of the present disclosure relates to a robot. The robot is equipped with sensors and a controller, and the controller is configured to perform the control method in the sixth embodiment.

An eighth embodiment of the present disclosure relates to a non-temporary computer-readable storage medium. When instructions in the storage medium are executed by a processor, the processor is enabled to perform the control method in the sixth embodiment.

The steps of the foregoing methods are divided only for clarity of description. When implemented, the steps may be combined into one step or some steps may be split into a plurality of steps, and the implementations fall within the protection scope of this present disclosure as long as the steps include the same logical relationship. Inessential modifications added or inessential designs introduced to the algorithms or processes without changing the core designs of the algorithms or processes all fall within the protection scope of this present disclosure.

The technical details in the above embodiments can correspond to each other. To avoid repetition, they are not described again in different embodiments. Similarly, the relevant technical details mentioned in each embodiment can also be applied in other embodiments.

The above has described in detail the preferred embodiments of the present disclosure, but it should be understood that various aspects of the embodiments can be modified to adopt other aspects, features, and concepts of patents, applications, and publications to provide additional embodiments if necessary.

It should be understood that although this specification is described in terms of embodiments, not each embodiment comprises only one separate technical solution, the specification is described in this way only for clarity, and the person skilled in the art should consider the specification as a whole, and the technical solutions in each embodiment can be suitably combined to form other embodiments that can be understood by the person skilled in the art.

The series of detailed descriptions given above are only specific to the feasible embodiments of the present disclosure, they are not intended to limit the scope of protection of the present disclosure, and any equivalent embodiments or variations not departing from the spirit of the art of the present disclosure shall be included within the scope of protection of the present disclosure.

## Claims

1. A robot guidance device, comprising a pair of guidance cables, wherein the pair of guidance cables are disposed symmetrically relative to a centerline and spaced apart from each other to form a spacing region, and a magnetic field in the spacing region is used to guide a robot to adjust its heading; and the guidance cables each comprises a pair of electrically connected guidance wire segments, a pair of the guidance wire segments are oppositely disposed and spaced apart from each other, and a direction in which a pair of the guidance wire segments are spaced apart is consistent with a direction in which the pair of guidance cables are spaced apart.

2. The robot guidance device according to claim 1, wherein directions of current in two adjacent guidance wire segments of each of the guidance cables are opposite, and directions of current in two said guidance wire segments symmetrical relative to the centerline are opposite.

3. The robot guidance device according to claim 1, wherein the guidance device has a first end and a second end along extension directions of the guidance cables; and
the guidance device comprises a first functional portion connected to a side of each of the guidance cables facing the first end and a second functional portion connected to a side of each of the guidance cables facing the second end, and the first functional portion and the second functional portion construct a pair of the guidance wire segments of the guidance cables into an electrical circuit.

4. The robot guidance device according to claim 3, wherein two first functional portions are provided, and at least one of the first functional portions comprises a pair of first wire segments;
wherein the pair of first wire segments are electrically connected to the pair of guidance wire segments respectively; and
the pair of first wire segments at least partially overlap each other; or
the pair of first wire segments are spaced apart.

5. The robot guidance device according to claim 4, wherein two first functional portions with the pair of first segments are provided, both extend towards the centerline, and are electrically connected to a control module; and two second functional portions are provided, and are connected to sides of the pair of guidance cables respectively facing the second end.

6. The robot guidance device according to claim 4, wherein one first functional portion with the pair of first segments is provided, and the other first functional portion is a first connecting wire segment connecting the pair of guidance wire segments;
wherein one second functional portion is provided and connected to the pair of guidance cables.

7. The robot guidance device according to claim 6, wherein the second functional portion comprises a pair of second wire segments oppositely disposed; two ends of each of the second wire segments are connected to two guidance wire segments in different said guidance cables respectively, and the two guidance wire segments symmetrical relative to the centerline are connected to the same second wire segment.

8. The robot guidance device according to claim 7, wherein each of the second wire segments has a first inclined portion, a horizontal portion, and a second inclined portion that are connected sequentially, and the two horizontal portions in a pair of the second wire segments overlap.

9. The robot guidance device according to claim 3, wherein one first functional portion is provided and comprises a pair of first wire segments extending in the same direction; and two ends of each of the first wire segments are connected to two guidance wire segments in the different guidance cables respectively, and the two guidance wire segments symmetrical relative to the centerline are connected to the same first wire segment.

10. The robot guidance device according to claim 3, wherein two second functional portions are provided and spaced apart from each other; and at least one of the second functional portions comprises a pair of second wire segments extending obliquely towards the centerline;
wherein the pair of second wire segments are electrically connected to the pair of guidance wire segments respectively.

11. The robot guidance device according to claim 10, wherein the distance between the pair of guidance wire segments of the guidance cable is D1; and the distance between the pair of second wire segments is D2, wherein 1/2D1≤D2≤2/3D1.

12. The robot guidance device according to claim 10, wherein the angle between the second wire segment and the guidance wire segment connected thereto is α, and 90°<α<180°.

13. The robot guidance device according to claim 12, wherein 100°<α≤135°.

14. The robot guidance device according to claim 3, wherein two second functional portions are provided; and
at least one of the second functional portions comprises a second connecting wire segment connecting the pair of guidance wire segments.

15. The robot guidance device according to claim 14, wherein the second connecting wire segment is an arc wire segment or a straight wire segment.

16. The robot guidance device according to claim 1, wherein the pair of guidance wire segments comprises an inner guidance wire segment closer to the centerline and an outer guidance wire segment farther from the centerline;
a pair of sensors are disposed on the robot, which are used to detect a working magnetic field generated by the guidance device and control the robot to adjust its heading according to the detected working magnetic field; and
when the pair of sensors are located at symmetrical positions relative to the centerline, the distances between the sensor and the outer guidance wire segment and the inner guidance wire segment that are located on the same side of the centerline as the sensor are C0 and Ci, respectively; and the distances between the sensor and the outer guidance wire segment and the inner guidance wire segment that are located on two sides of the centerline are F0 and Fi, respectively; wherein Ci<C0≤Fi<*Fo*, 1/2C0≤Ci≤4/5C0, and 1/2Fi≤C0<Fi.

17. The robot guidance device according to the claim 16, wherein 2/3C0≤Ci.

18. The robot guidance device according to the claim 16, wherein C0≤2/3Fi.

19. The robot guidance device according to claim 16, wherein when the pair of sensors are located at the symmetrical positions along the centerline, the distances between the sensors and the centerline are D3, and 1/2Ci≤D3≤1/2C0.

20. A heading adjustment method for a robot, wherein the heading adjustment method is applied to the robot guidance device according to any one of claim 1 to claim 19, and comprises:
receiving a magnetic field signal of a working magnetic field generated by the guidance device sensed by at least one sensor; and
adjusting the heading of the robot based on the working magnetic field generated by the guidance device.

21. The heading adjustment method for a robot according to claim 20, wherein adjusting the robot toward a direction of a preset trajectory when a strength ratio of the working magnetic fields obtained by the pair of sensors of the robot is not equal to a preset magnetic field strength ratio.

22. The heading adjustment method for a robot according to claim 21, wherein after the step of receiving a magnetic field signal of a working magnetic field generated by the guidance device sensed by at least one sensor, and before the step of adjusting the heading of the robot, the method further comprises the following step:
controlling the robot to move a preset distance or move for a preset duration.

23. The heading adjustment method for a robot according to claim 21, wherein the guidance device has a first end and a second end in extension directions of the guidance cables; the guidance device comprises a first functional portion connected to a side of each of the guidance cables facing the first end and a second functional portion connected to a side of each of the guidance cables facing the second end, and the first functional portion and the second functional portion construct a pair of guidance wire segments of each of the guidance cables into an electrical circuit; and
the step of adjusting the heading of the robot further comprises the following step:
controlling the robot to reduce the current moving speed based on the magnetic field generated by the first functional portion, which is sensed by at least one sensor of the robot.

24. A charging station comprises a base plate, a charging terminal, and the guidance device according to any one of claim 1 to claim 19, wherein the guidance device is disposed on the base plate.

25. A robot system, comprises:
a robot provided with a pair of sensors;
a boundary surrounding a work area for the robot to work; and
the charging station according to claim 24.

26. A docking guidance method for a robot system, wherein the docking guidance method is applied to the robot system according to claim 25, and comprises:
controlling the robot to search for the boundary and move along the boundary in response to a charging instruction;
receiving a magnetic field signal of a working magnetic field generated by the guidance device sensed by at least one sensor; and
adjusting the heading of the robot until the robot is docked with the charging terminal of the charging station based on the working magnetic field generated by the guidance device.

27. The docking guidance method of the robot system according to claim 26, wherein after the step of receiving a magnetic field signal of a working magnetic field sensed by at least one sensor, and before the step of adjusting the heading of the robot until the robot is docked with the charging terminal of the charging station based on the working magnetic field, the method further comprises:
controlling the robot to move a preset distance or move for a preset duration.

28. The docking guidance method for a robot system according to claim 27, wherein after the step of controlling the robot to move a preset distance or move for a preset duration, the method further comprises:
controlling the robot to reduce the current moving speed.

29. The docking guidance method for a robot system according to claim 26 or claim 27, wherein controlling the robot to reduce the current moving speed when at least one sensor of the robot senses the working magnetic field generated by the guidance device.
